# EUROPÄISCHE PATENTSCHRIFT

(11) **EP 0 927 879 B1**
(45) Veröffentlichungstag und Bekanntmachung des Hinweises auf die Patenterteilung: **03.04.2002**
(21) Anmeldenummer: 98124465.0
(22) Anmeldetag: 23.12.1998
(51) Int. Cl.: G01M 17/02

(54) **Anwendung einer Einrichtung zur Prüfung von Fahrzeugrädern**
Use of a device for testing vehicle wheels
Utilisation d'un dispositif pour tester des roues de véhicule

(30) Priorität: 30.12.1997 DE 19758241
(43) Veröffentlichungstag der Anmeldung: 07.07.1999
(73) Patentinhaber: FRAUNHOFER-GESELLSCHAFT ZUR FÖRDERUNG DER ANGEWANDTEN FORSCHUNG E.V., 80636 München (DE)
(72) Erfinder: Fischer, Gerhard, Dr.-Ing., 64291 Darmstadt (DE); Grubisic, Vatroslav, Prof. Dr.-Ing., 64354 Reinheim (DE)
(74) Vertreter: Weisert, Annekäte, Dipl.-Ing. Dr.-Ing.

(56) Entgegenhaltungen:
- EP-A- 0 302 488
- EP-A- 0 507 058
- EP-A- 0 554 779
- ASCHMONEIT E -K: "LABORFAHRTEN ALS BELASTUNGSTEST VON AUTORADSYSTEMEN" TECHNISCHE RUNDSCHAU TRANSFER, Bd. 80, Nr. 45, 4. November 1988, Seite 46/47, 49 XP000021167

## Beschreibung

Die Erfindung betrifft die Anwendung einer Einrichtung zur Prüfung von Fahrzeugrädern, Reifen, Radnaben, Radlagern und Radschrauben unter betriebsähnlichen Belastungsbedingungen, umfassend
(a) eine Halterungseinrichtung zum drehbaren Befestigen eines Fahrzeugsrads und zum Verschwenken desselben in unterschiedliche Sturzwinkel;
(b) eine derart um das Fahrzeugrad herum angeordnete Trommel, dass das Fahrzeugrad über einen darauf befindlichen Reifen in Rolleingriff mit der inneren Umfangsoberfläche der Trommel bringbar ist;
(c) eine Vertikal- oder Radialbelastungseinrichtung, die zum Aufbringen einer in der Vertikal- oder Radialrichtung des Fahrzeugsrads wirkenden Vertikal- oder Radialkraft auf die Halterungseinrichtung mit letzterer verbunden ist;
(d) eine Seiten- oder Axialbelastungseinrichtung zum Aufbringen einer in der Seiten- oder Axialrichtung des Fahrzeugrads wirkenden Seiten oder Axialkraft, wobei die Seiten- oder Axialbelastungseinrichtung zum Aufbringen der Seiten- oder Axialkraft auf die Halterungseinrichtung mit letzterer verbunden ist;
(e) wenigstens einen auf der inneren Umfangsoberfläche der Trommel angeordneten Ring, der als Anlaufring benachbart dem Reifen und der Flanke des Fahrzeugsrads angeordnet und auf der dem Reifen zugewandten Seite abgeschrägt ist; und
(f) eine Einrichtung zum Drehen der Trommel;
(g) wobei die Vertikal- oder Radialbelastungseinrichtung und die Seiten- oder Axialbelastungseinrichtung je für sich gelenkig mit der Halterungseinrichtung verbunden sind;
(h) wobei die Vertikal- oder Radialbelastungseinrichtung parallel zur inneren Umgangsoberfläche der Trommel frei verschiebbar gelagert ist;
(i) wobei die Halterungseinrichtung um eine Verschwenkachse verschwenkbar ist, welche parallel zur inneren Umfangsoberfläche der Trommel und senkrecht zur Achse eines Achszapfens, der zusammen mit einem Balastungsbügel die Halterungseinrichtung bildet, für die drehbare Befestigung eines Fahrzeugrads verläuft; und
(j) wobei eine Stellvorrichtung zur Voreinstellung des maximalen Sturzes eines Fahrzeugrads vorgesehen ist.

Eine Einrichtung mit den obigen Merkmalen (a) bis (g) ist aus der europäischen Patentschrift 63 245 und der US-Patent-schrift 4 475 383 bekannt.

Außerdem ist eine Einrichtung mit den obigen Merkmalen (a) bis (f), d.h. ohne das Merkmal (g), aus der deutschen Patentschrift DE 33 41 721 C2 bekannt.

Weiterhin ist aus EP-A-0 507 058 sowie E.-K. ASCHMONEIT: "LABORFAHRTEN ALS BELASTUNGSTEST VON AUTORADSYSTEMEN", TECHNISCHE RUNDSCHAU, Bd. 80, Nr. 45,4., November 1988, Seiten 46 bis 49, XP000021167 eine Einrichtung mit den obigen Merkmalen (a) bis (g) und (i) bekannt, bei der jeweils eine selbsttätige Sturzeinstellung - nicht jedoch eine Voreinstellung des maximalen Sturzwinkels - des Fahrzeugrads um den Radaufstandspunkt erfolgt.

In diesen vorgenannten bekannten Einrichtungen ist der Sturz eines zu prüfenden Fahrzeugrades verstellbar. Die Einstellung eines gewissen bzw. vorbestimmten Sturzes des Fahrzeugrades ist bei einer Prüfung im Lastfall der Kurvenfahrt insbesondere erforderlich wegen der
(i) Einleitung hoher Seitenkräfte,
(ii) Vermeidung des Rauslaufens des Rades aus der Trommel,
(iii) Simulation einer betriebsähnlichen Radverformung.

Der Sturzwinkelbereich liegt bei kleinen Pkw-Rädern bei ca. 15°, bei breiten Pkw-Rädern bei ca. 8°, bei Nutzfahrzeug-Einzelrädern bei ca. 10° und bei Zwillingsrädern ca. 6°.

Das Problem bei Versuchen in der eingangs genannten bekannten Einrichtung (Prüfstand nach der EP 0 063 245 B1 und der US 4 475 383) liegt u.a. in den kinematischen Verhältnissen der Sturzverstellung, die den für die Prüfung zu wünschenden kinematischen Verhältnissen nicht entsprechen, sowie außerdem in den großen Unterschieden der Neuentwicklung von Kraftfahrzeugreifen (Niederquerschnittsreifen mit breiten Felgen) und von Reifenbreiten, z.B.:
- bei Pkw zwischen 150 mm und 335 mm (Sportwagen) - Faktor 2
- bei Lkw mit Einzel- und Zwillingsreifen - Faktor 3-4.

Die automatische, kinematische Verstellung innerhalb des Prüfstandes aus den Hebelarmverhältnissen allein deckt diese großen Breitenunterschiede nicht vollständig ab. Danach wird bei einem breiteren Reifen bzw. einem Lkw-Zwillingsrad ein zu großer Sturzwinkel erzeugt, der eine höhere Beanspruchung und frühzeitigen Bruch bewirkt. Das Reifenrückstellmoment reicht nicht aus, um den Sturzwinkel zu begrenzen.

Bei der Prüfvorrichtung nach der oben genannten DE 33 41 721 C2 sind diese Probleme noch ausgeprägter, denn diese bekannte Prüfvorrichtung ist so ausgebildet, dass
(1) das Fahrzeugrad um eine die Radachse schneidende und senkrecht zur Radachse sowie parallel zur Radaufstandsfläche verlaufende Schwenkachse verdrehbar ist, so dass der Sturzwinkel des Rades - etwas allgemeiner ausgedrückt - dadurch verstellt wird, dass das Rad um eine von dem Radaufstandspunkt weit entfernte Schwenkachse verdreht wird;
(2) die beiden Krafterzeuger, d.h. die Vertikal- oder Radialbelastungseinrichtung und die Seiten- oder Axialbelastungseinrichtung bezüglich des Fahrzeugrads und damit der Halterungseinrichtung für das Fahrzeugrad so angeordnet sind, dass der eine Krafterzeuger über den anderen Krafterzeuger auf das Fahrzeugrad wirkt, d.h. die beiden Krafterzeuger wirkungsmäßig hintereinandergeschaltet sind; und
(3) die beiden Krafterzeuger nur verschieblich, nämlich über Linearführungen miteinander und mit der Halterungseinrichtung verbunden sind.

Die Einrichtungen nach den eingangs zuletzt genannten beiden Druckschriften ermöglichen zwar eine selbsttätige Sturzverstellung und eine Verschwenkung des Fahrzeugsrads um den Radaufstandspunkt, jedoch ist es bei diesen Einrichtungen sowie bei der Einrichtung nach der oben ebenfalls genannten DE 33 41 721 nach den langjährigen Erfahrungen bei der Anmelderin trotz der dortigen "selbsttätigen" Sturzwinkeleinstellung aufgrund der kinematischen Verhältnisse dieser automatischen Sturzeinstellung notwendig, umfangreiche Vorausmessungen an Fahrzeugen durchzuführen, um die Ansteuerdaten für die automatische oder die gezielte Einstellung des Sturzwinkels zu erhalten, damit man betriebsähnliche Belastungsbedingungen erzielt, um die langwierigen Prüfergebnisse zuverlässig in praxisgerechte Ergebnisse übertragen zu können.

Aufgabe der Erfindung ist es, eine besondere Anwendung der eingangs genannten Einrichtung zur Verfügung zu stellen, die es gestattet, dass eine Prüfung bei Verwendung der unterschiedlichsten Fahrzeugreifen, insbesondere bei Verwendung von relativ breiten Fahrzeugreifen und Nutzfahrzeug-Zwillingsrädern mit Reifen, weitestgehend den tatsächlichen Verhältnissen, d.h. betriebsähnlichen Belastungsbedingungen entspricht und damit die obigen Probleme überwunden werden.

Diese Aufgabe wird erfindungsgemäß dadurch gelöst, dass bei einer Einrichtung der eingangs genannten Art in Anwendung der Einrichtung folgende Verfahrensschritte bei einem in der Einrichtung befestigten Fahrzeugrad durchgeführt werden:
(1) Einstellen eines Einstellwerts für einen maximalen Sturzwinkel zur Generierung eines, abhängig von der Reifenbreite, der Einpresstiefe des Rades und der Kräfteverhältnisse den Vertikal- oder Radialkraft und der Seiten- oder Axialkraft, eines sich selbsttätig einstellenden Sturzwinkels;
(2) Einstellen von unterschiedlichen Werten der Vertikal- oder Radialkraft und der Seiten- oder Axialkraft und Abrollenlassen des Fahrzeugrads in der Trommel, so dass sich unterschiedliche Sturzwinkel entsprechend der Höhe der Vertikal- oder Radialkraft und der Seiten- oder Axialraft automatisch einstellen;
(3) Erstellen einer optimalen Kennlinie unter Messung mit Dehnungsmessstreifen, die zu entsprechend zutreffenden Spannungen an Rad und Nabe führt.

Auf diese Weise wird es ermöglicht, mit einem allgemein erarbeiteten, sogenannten "Basisbelastungsprogramm" auszukommen, ohne dass zusätzliche umfangreiche Messungen für die verschiedenen Räder und Reifengrößen durchgeführt werden müssen.

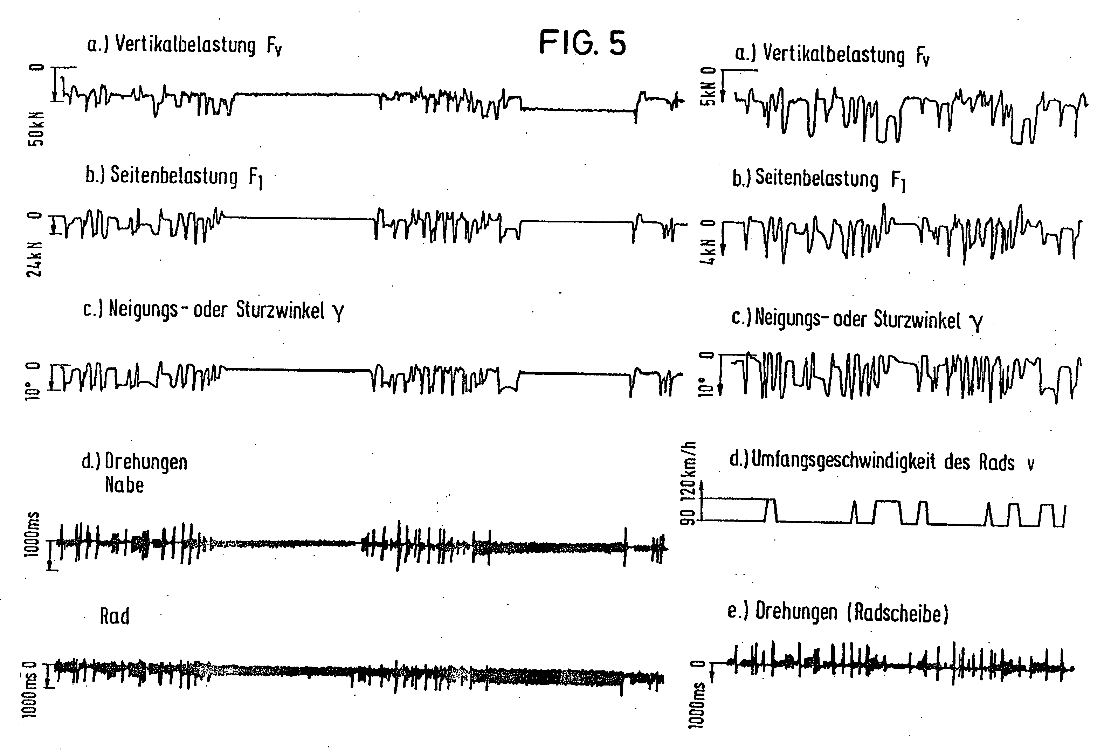

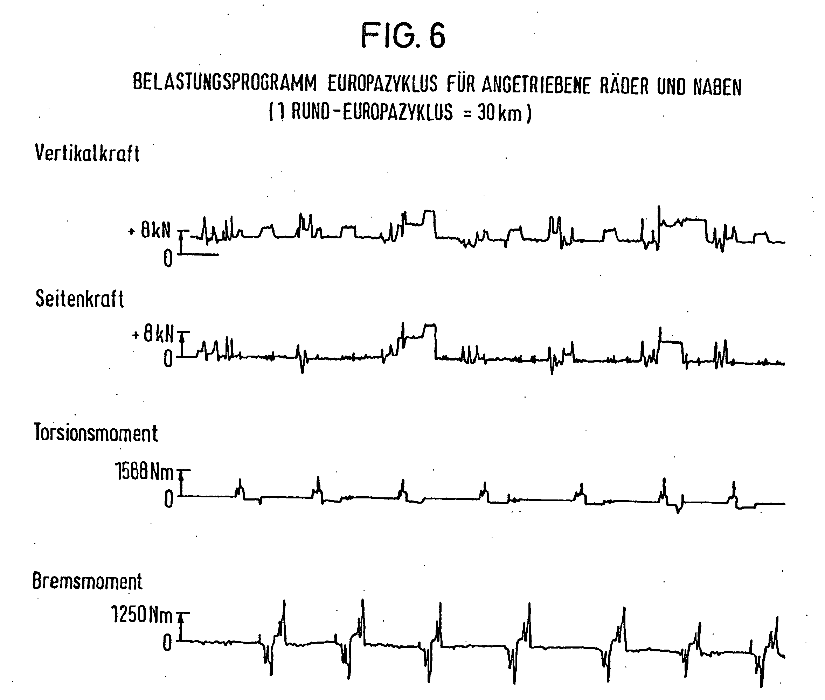

Die erfindungsgemäße Anwendung der obigen Prüfeinrichtung hat, wie umfangreiche Untersuchungen, Messungen und Prüfungen gezeigt haben, die im Fraunhofer-Institut für Betriebsfestigkeit LBF in Darmstadt im Rahmen der Erfindung durchgeführt wurden, erhebliche Zeit-, Arbeits- und Kosteneinsparungen bei der Prüfung von Fahrzeugrädern, Reifen, Radnaben, Radlagern und Radschrauben unter betriebsähnlichen Belastungsbedingungen zur Folge, wie weiter unten näher dargelegt ist (siehe insbesondere die Figuren 5 und 6 und die zugehörige Beschreibung).

Die Einrichtung für die erfindungsgemäße Anwendung ist mit einer Stellvorrichtung zur Voreinstellung des maximalen Sturzes des Fahrzeugrads versehen, derart, dass der Sturz auf einen vorbestimmten, maximalen Sturzwinkel begrenzt ist, jedoch kleinere Sturzwinkel entsprechend dem Verhältnis der angewandten Axial- und Radialkraft selbsttätig einstellbar sind.

Die Stellvorrichtung ist vorzugsweise eine Begrenzungseinrichtung zur Beschränkung des maximalen Verschwenkwinkels der Halterungseinrichtung um eine zur Radachse senkrechte und zur Radaufstandsfläche parallele Verschwenkachse.

Die Stellvorrichtung ist bevorzugt eine Einrichtung zum Verstellen des Moments, welches durch die Seiten- oder Axialbelastungseinrichtung bei deren unveränderter Krafteinstellung auf die verschwenkbar gelagerte Halterungseinrichtung ausgeübt wird.

Insbesondere kann die Stellvorrichtung eine Positionierungs- oder Arretierungsvorrichtung für ein Angriffselement der Seiten- oder Axialbelastungseinrichtung umfassen, über welches letztere an der Halterungseinrichtung zum Erzeugen eines Moments um die Verschwenkachse derselben angreift.

Eine solche Ausführungsform kann so ausgebildet sein, dass das Angriffselement ein Verschiebeelement ist, das auf einem Arm an der um die Verschwenkachse verdrehbaren Halterungseinrichtung verschiebbar ist, wobei bevorzugt die Positionierungs- oder Arretierungsvorrichtung ein die maximale wirksame Länge des Arms begrenzender verstellbarer Anschlag ist. Insbesondere kann der Arm senkrecht zur Radachse und/oder senkrecht zur Verschwenkachse verlaufen.

Weiterhin kann die Einrichtung für die Anwendung gemäß der Erfindung eine die Bewegung der Halterungseinrichtung dämpfende Einrichtung (Dämpfungseinrichtung) aufweisen, wobei die Dämpfungseinrichtung insbesondere zwischen der Halterungseinrichtung und der Seiten- oder Axialbelastungseinrichtung und/oder zwischen der Halterungseinrichtung und der Vertikal- oder Radialbelastungseinrichtung angeordnet ist, und wobei besonders bevorzugt die Dämpfungseinrichtung zwischen dem oder einem Arm der Halterungseinrichtung und der Seiten- oder Axialbelastungseinrichtung angeordnet ist.

Zur Durchführung von Versuchsprogrammen, wie sie beispielsweise weiter unten beschrieben sind, kann die Stellvorrichtung gemäß einem vorgegebenen Programm verstellbar sein, wozu die Stellvorrichtung bevorzugt mechanisch, elektrisch oder hydraulisch verstellbar ist.

Die vorstehenden sowie weitere Merkmale und Vorteile der Erfindung werden nachstehend anhand von bevorzugten Ausführungsformen unter Bezugnahme auf die Zeichnung erläutert; es zeigen:
- Figur 1: eine, teilweise im Schnitt dargestellte, schematische Aufrissansicht einer Ausführungsform einer Einrichtung zur Durchführung der Anwendung nach der Erfindung;
- Figur 2: eine Darstellung der wesentlichen Kräfte und des Sturzwinkels in der Einrichtung der Figur 1;
- Figur 3: eine Kurvenschar, die den Sturzwinkel in Abhängigkeit von der Sturzvoreinstellung X, d.h. der Einstellung des maximalen Sturzwinkels bei Versuchen in der Einrichtung nach Figur 1 zeigt;
- Figur 4: zwei Kurven, welche die Abhängigkeit des Sturzwinkels von der Seitenkraft für verschiedene Sturzvoreinstellungen X bei Versuchen in der Einrichtung nach Figur 1 zeigen; und
- Figur 5 und 6: Beispiele von verschiedenen Belastungsprogrammen, die mit der Einrichtung nach Figur 1 verwirklicht wurden.

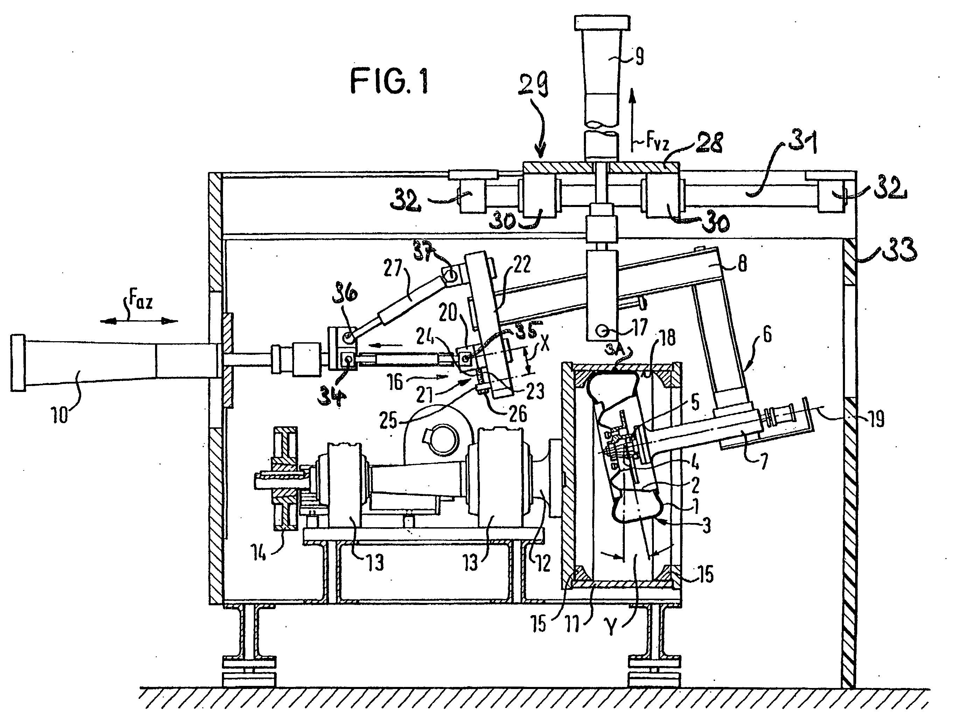

Es sei zunächst auf die Figur 1 Bezug genommen, die eine Ausführungsform einer Einrichtung zur Prüfung von Fahrzeugrädern, Radnaben, Radlagern und Radschrauben unter betriebsähnlichen Belastungsbedingungen zeigt, welche einschließlich zu prüfender Objekte folgendes aufweist:

Einen Reifen 1, der auf der Felge 2 eines aus letzterer und einer Radschüssel bestehenden Rades 3 montiert und mit Nennluftdruck oder erhöhtem Luftdruck aufgepumpt ist. Zur Befestigung des Fahrzeugrads 3 und zur Aufnahme der Fahrzeugradkräfte ist eine Radnabe 4 mit Radlager 5 vorgesehen. Bei der Radnabe kann es sich um eine überdimensionierte Versuchsnabe handeln, wenn zum Beispiel das Fahrzeugrad 3 bzw. der Reifen 1 geprüft werden soll oder es kann sich hierbei um eine Originalnabe mit der zugehörigen Original-Fahrzeuglagerung handeln, wenn die Radnabe und/oder die Fahrzeuglagerung geprüft werden soll. Die Übertragung der eingeleiteten quasistatischen Kräfte in das sich drehende Fahrzeugrad 1, 2 erfolgt mittels des Radlagers 5 und des Achszapfens 7. Bei der Prüfung des Fahrzeugrads 3 werden überdimensionierte Radlager 5 verwendet, während bei der Prüfung der Radnabe 4 und der Radlager 5 die Originalradlager sowie die Originalachsschenkel eingebaut werden.

Weiterhin weist die Einrichtung gemäß der Figur 1 einen Belastungsbügel 8 auf, der zusammen mit dem Achszapfen 7 eine Halterungseinrichtung 6 zum drehbaren Befestigen des Fahrzeugrads 3 bildet. Über diesen Belastungsbügel 8, den Achsapfen 7, die Radlager 5, die Radnabe 4 und die Radschrauben werden eine Vertikal- oder Radialkraft und eine Seiten- oder Axialkraft in die Radschüssel eingeleitet, und zwar so, daß die am Reifen 1 entstehenden Reaktionskräfte in einem definierten Radaufstandspunkt abgenommen werden. Zum Anwenden einer in der Radialrichtung des Fahrzeugrads 3 wirkenden konstanten oder unterschiedlich hohen Vertikal- oder Radialkraft Fᵥ ist eine Vertikal- oder Radialbelastungseinrichtung 9, die vorliegend als servohydraulischer Zylinder ausgebildet ist, vorgesehen. Weiter ist zum Anwenden einer in der Axialrichtung des Fahrzeugrads 3 wirkenden konstanten oder unterschiedlich hohen Seiten- oder Axialkraft Fₕ eine Seiten- oder Axialbelastungseinrichtung 10 vorhanden, die vorliegend ebenfalls als servohydraulischer Zylinder ausgebildet ist.

Da die Bezeichnungen "Vertikalkraft" Fᵥ und "Radialkraft" ebenso wie die Bezeichnungen "Seitenkraft" Fₕ und "Axialkraft" Synonyme sind, wird nachstehend nur jeweils die eine oder andere der beiden Bezeichnungen verwendet.

Schließlich ist eine derart um das Fahrzeugrad 3 herum angeordnete Trommel 11, daß das Fahrzeugrad 3 über den darauf befindlichen Reifen 1 in Rolleingriff mit der inneren Umfangsoberfläche der Trommel bringbar ist, vorgesehen. Die Trommel 11 besteht beispielsweise aus einer Grundplatte, einem Trommelkörper und einem Deckel und weist zwei Anlaufringe 15 auf. In dieser Trommel 11, in der das Fahrzeugrad 3 abrollt, werden die Axialreaktionskraft und die Radialreaktionskraft im Radaufstandspunkt 3A bzw. in der Radaufstandsfläche im Reifen 1 abgenommen. Der Innendurchmesser des Trommelkörpers ist signifikant größer als der Reifendurchmesser.

Außerdem ist eine Einrichtung zum Drehen der Trommel 11 vorgesehen, welche eine Antriebswelle 12 zur Befestigung der Trommel 11, Lager 13 zur Lagerung der Antriebswelle 12 und zur Aufnahme der Radial- und Axialreaktionskräfte, einen nicht gezeigten Antriebsmotor zum Antrieb der Antriebswelle 12 über einen Keilriemenantrieb 14 und damit zum Antrieb der Trommel 11 und des Fahrzeugrads 3 sowie zum Abbremsen der Antriebswelle 12, der Trommel 11 und des Fahrzeugrads 3 umfaßt.

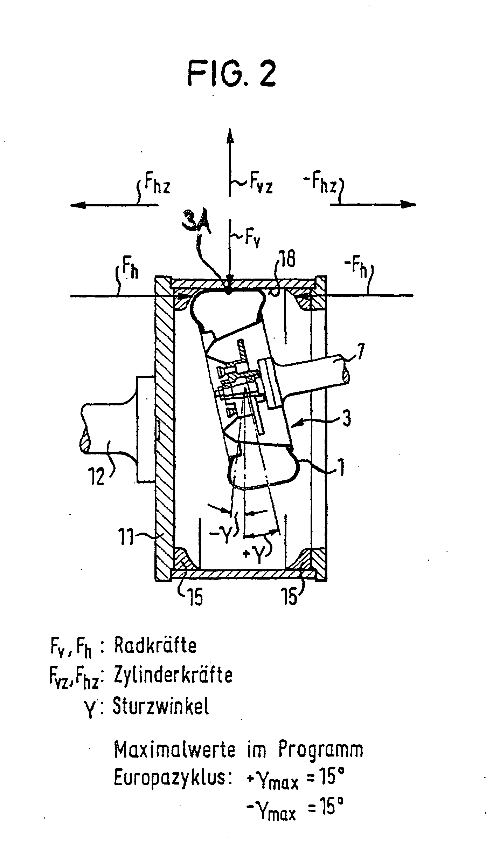

Es sei nun die Ankopplung der Vertikal- oder Radialbelastungseinrichtung 9 und der Seiten- oder Axialbelastungseinrichtung 10 an die Halterungseinrichtung 6 und in Verbindung damit die Funktionsweise der vorstehend beschriebenen Einrichtung zur Prüfung von Fahrzeugrädern, Radnaben, Radlagern und Radschrauben unter betriebsähnlichen Belastungsbedingungen näher erläutert (siehe auch Figur 2):

Die betriebsähnliche Prüfung von Fahrzeugrädern 3, Radnaben 4, Radschrauben und Radlagern 5 erfolgt unter Einleitung der im Betrieb auftretenden Radkräfte über den Reifen 1 in das sich drehende Fahrzeugrad 3. Bei den am Reifen 1 angreifenden Radkräften kann es sich um Radialkräfte Fᵥ, positive Axialkräfte +Fₕ, negative Axialkräfte -Fₕ sowie Tangentialkräfte Fₜ (Antriebs- und Bremskräfte) sowie Kombinationen hiervon handeln.

Zunächst sei die Erzeugung von in der Radialrichtung des Fahrzeugrads 3 wirkenden Radialkräften beschrieben:

Auf das Fahrzeugrad wirkende Radialkräfte entstehen im Betrieb bei Geradeausfahrt eines Fahrzeuges, wobei diese Radialkräfte in unterschiedlicher Höhe je nach den Fahrbedingungen auftreten können, bei denen es sich beispielsweise um eine Fahrt auf Straßen unterschiedlicher Unebenheit, eine Fahrt über Schlaglöcher, Frostaufbrüche, Bahnübergänge usw. handeln kann, sowie bei Kurvenfahrt infolge der Gewichtsverlagerung. Die am Fahrzeugrad wirkenden Radialreaktionskräfte werden erzeugt, wenn an der Radialbelastungseinrichtung 9 eine Zugkraft als Radialkraft F_{vz} in den Belastungsbügel 8 eingeleitet wird und sich das Fahrzeugrad 3 gegenüber dem Reifen 1 an der sich drehenden Trommel 11 abstützt. Durch die Verformung, nämlich die Eindrückung, des Reifens 1 unter der Radialreaktionskraft entsteht ein Radaufstandspunkt, d.h. die Reaktionskraft wird über einen definierten Bereich über den Reifenumfang und der Reifenbreite eingeleitet, wobei in dem um 180° versetzten Radbereich ein Zwischenraum zwischen dem Reifen 1 und dem Trommelkörper auftreten kann oder absichtlich vorgesehen ist. Voraussetzung zur Erzeugung von rein radialen Reaktionskräften im Fahrzeugrad 3 ist die Einleitung der erwähnten Zugkraft mit Hilfe der Radialbelastungseinrichtung 9 in der Radmitte.

Hierzu ist die Vertikal- oder Radialbelastungseinrichtung 9 auf einer Basis 28, zum Beispiel einer Platte, montiert; und diese Basis 28 ist über eine Verschiebeführung 29 horizontal, d.h. parallel zur Innenlauffläche 18 der Trommel 11 frei verschiebbar bzw. frei gleitend verschiebbar, so daß die Vertikal- oder Radialbelastungseinrichtung 9 dem Fahrzeugrad bei seitlichen Verschiebungen in der Trommel 11 von selbst folgt und die Vertikal- oder Radialkraft F_{vz} stets im Radaufstandspunkt 3A eingeleitet bzw. abgenommen wird. Durch die verschiebbar vorgesehene Einleitung der Vertikal- oder Radialkraft in den Belastungsbügel 8 bzw. die Halterungseinrichtung 6 ist außerdem eine Anpassung für jede Reifenbreite möglich.

Vorliegend umfaßt die Verschiebeführung 29 an der Basis 28 befestigte Führungshülsen 30, die auf einer Führungsstange 31 oder mehreren parallelen Führungsstangen gleitend verschiebbar sind, welche ihrerseits über Halterungen 32 ortsfest, z.B. am Rahmen 33 der Prüfeinrichtung, angebracht ist bzw. sind. Das ist jedoch nur ein Ausführungsbeispiel, denn die Verschiebeführung 29 kann in der verschiedensten Art ausgeführt sein, um die obige Funktionsweise sicherzustellen.

Als nächstes sei die Erzeugung von in der Axialrichtung des Fahrzeugrads wirkenden Axialkräften erläutert:

Axialkräfte entstehen im Betrieb eines Fahrzeugs bei Kurvenfahrt mit zur Fahrzeugmitte gerichteter Kraftkomponente, also positiver Axialkraft +Fₕ am kurvenäußeren Rand und bei Geradeausfahrt über Fahrbahnunebenheiten, zum Beispiel Schlaglöcher, wodurch die Kraftrichtung sowohl zur Fahrzeugmitte, was einer positiven Axialkraft +Fₕ entspricht, als auch zur Fahrzeugauβenseite, was einer negativen Axialkraft -Fₕ entspricht, gerichtet sein kann. Im Fahrbetrieb können Axialkräfte nur in Verbindung mit Radialkräften als Lastkombinationen auftreten. In der vorliegenden Einrichtung werden die auf das Fahrzeugrad einwirkenden Axialkräfte als Reaktionskräfte mit Hilfe der Axialbelastungseinrichtung 10, die als servohydraulischer Zylinder ausgebildet ist, erzeugt.

Eine positive Axialreaktionskraft wird bei gegebener Radialreaktionskraft durch eine Zugkraft an der Axialbelastungseinrichtung als Reaktionskraft durch die Abstützung des Reifens 1 an der schrägen Fläche des Anlaufringes 15 hervorgerufen. Die Zugkraft an der Axialbelastungseinrichtung 10 wird in der Höhe der Innenlauffläche des Trommelkörpers im Radaufstandspunkt 3A eingeleitet, wobei die Axialreaktionskraft am Reifen 1 im Bereich der Radaufstandsfläche über einen begrenzten Bereich des Reifenumfangs des Reifens resultiert. Durch die Einleitung der Axialkraft in Höhe der Radaufstandspunkte sind betriebsgleiche Hebelarmverhältnisse gewährleistet. Eine negative Axialreaktionskraft wird bei gegebener Radialreaktionskraft durch eine Druckkraft an der Axialbelastungseinrichtung 10 erzeugt, wodurch die Axialreaktionskraft am Fahrzeugrad durch Ablauf des Reifens 1 am äußeren Anlaufring 15 entsteht.

Die Anlaufringe 15 sind im Trommelkörper verschiebbar angeordnet, so daß eine Anpassung an beliebige Reifenbreiten bzw. Fahrzeugradgrößen möglich ist, was aufgrund des begrenzten Zylinderwegs des die Axialbelastungseinrichtung 10 bildenden servohydraulischen Zylinders erforderlich ist .

Durch die Einleitung der Axialreaktionskräfte über die Anlaufringe 15 kann mit der vorliegenden Einrichtung durch den hierdurch bedingten Formschluss ein prinzipiell beliebiges Verhältnis zwischen Axial- und Radialreaktionskraft erreicht werden.

Die Steuerung der Radialbelastungseinrichtung 9 und der Axialbelastungseinrichtung 10 erfolgt unabhängig voneinander, so dass jede gewünschte Lastkombination, bestehend aus Radialkräften Fᵥ und positiven Axialkräften +Fₕ sowie negativen Axialkräften -Fₕ eingestellt werden kann. Dadurch ist eine betriebsähnliche, regellose Simulation aller im Betrieb auftretenden Belastungsfälle möglich.

Wesentlich für das in der Einrichtung erfolgende Verschwenken des Fahrzeugrades um den Radaufstandspunkt 3A ist in Verbindung mit der erfindungsgemäß vorgesehenen freien oder selbsttätigen Verschiebbarkeit der Vertikal- oder Radialbelastungseinrichtung 9 und der Halterungseinrichtung 6 mit letzterer, wie oben beschrieben, die Verschwenkbarkeit der Halterungseinrichtung 6 bzw. des Belastungsbügels 8 um die Verschwenkachse 17, welche parallel zur Radaufstandsfläche und senkrecht zur Radachse 19 ist und über welche die Halterungseinrichtung 6 bzw. der Belastungsbügel 8 gelenkig mit der Vertikal- oder Radialbelastungseinrichtung 9 verbunden ist.

Denn die Verschwenkbarkeit des Fahrzeugrades 3 um den Radaufstandspunkt 3A bzw. die Radaufstandsfläche, d.h. um eine virtuelle Achse, die parallel zur Verschwenkachse 17 und senkrecht zu der durch die Verschiebevorrichtung 29 ermöglichten Verschiebungsrichtung ist, wird ermöglicht durch die freie Verschiebbarkeit der Halterungseinrichtung 6 bzw. des Belastungsbügels 8 längs der Verschiebeführung 29 und die gleichzeitige Verschwenkbarkeit der Halterungseinrichtung 6 bzw. des Belastungsbügels 8 um die Verschwenkachse 17. Denn wenn sich das Fahrzeugrad 3 um den Radaufstandspunkt 3A im Sinne einer Sturzwinkeländerung verschwenkt, erfolgt gleichzeitig
(a) ein Verschieben der Halterungseinrichtung 6 zusammen mit der Vertikal- oder Radialbelastungseinrichtung 9 längs der Verschiebeführung 29, und
(b) ein Verschwenken der Halterungseinrichtung 6 um die Verschwenkachse.

Dadurch, dass die Vertikal- oder Radialbelastungseinrichtung 9 zusammen mit der Halterungseinrichtung 6 frei verschiebbar ist, wird gewährleistet, dass die Vertikal- oder Radialkraft F_{vz} auch bei seitlicher Verschiebung bzw. Auswanderung des Fahrzeugrades 3 nach dem einen oder anderen der beiden Anlaufringe 15 zu immer im Radaufstandspunkt 3A angreift bzw. abgenommen wird.

Eine demgegenüber "verschlechterte" Ausführungsform der Einrichtung für die erfindungsgemäße Anwendung, die zufriedenstellend arbeitet, wenn die Position des Radaufstandspunkts 3A in Axialrichtung der Trommel 11 festgehalten würde, besteht darin, dass die Halterungseinrichtung 6 längs einer-nicht dargestellten - linearen Verschiebeführung, die um die Verschwenkachse 17 verdrehbar ist, frei verschieblich ist. Auf diese Weise könnte sich das Fahrzeugrad 3 ebenfalls um den Radaufstandspunkt 3A im Sinne einer Sturzverstellung verschwenken, während die Vertikal- oder Radialbelastungseinrichtung 9 ortsfest bleibt. Um dann den Radaufstandspunkt 3A parallel zur Achse der Trommel 11 verstellen zu können, müsste die Vertikal- oder Radialbelastungseinrichtung 9 im Sinne der Verschiebelagerung 29 verstellbar sein.

Es sei nun der Aufbau der weiterhin vorgesehenen Stellvorrichtung 16 zur Voreinstellung des Sturzwinkels des Fahrzeugrads 3 derart, dass der Sturz auf einen vorbestimmten maximalen Sturzwinkel begrenzt ist, sich jedoch kleinere Sturzwinkel (Zwischengröße) entsprechend dem Verhältnis der angewandten Axial- und Radialkraft von selbst einstellen, beschrieben:

Generell ist vorliegend die Stellvorrichtung 16 eine Begrenzungseinrichtung zur Beschränkung des maximalen Sturzwinkels und damit des Verschwenkwinkels der Halterungseinrichtung 6 bzw. 7, 8 um die zur Radachse 19 senkrechte und zur Radaufstandsfläche 18 parallele Verschwenkachse 17 bzw. um den Radaufstandspunkt 3A. Die Stellvorrichtung 16 umfaßt eine Positionierungs- oder Arretierungsvorrichtung 21 für ein Angriffselement 20 der Seiten- oder Axialbelastungseinrichtung 10, über welches letztere an der Halterungseinrichtung 8, 7 zum Erzeugen eines Moments um die Verschwenkachse 17 derselben angreift.

Vorliegend ist das Angriffselement 20 ein Verschiebeelement, das auf einem Arm 22 an der um die Verschwenkachse 17 verdrehbaren Halterungseinrichtung 8, 7 verschiebbar ist, und die Positionierungs- oder Arretierungsvorrichtung 21 ist ein die maximale wirksame Länge des Arms 22 begrenzender verstellbarer Anschlag 23 für das Verschiebeelement 20, wobei der Anschlag 23 die Form eines Gewindebolzens 24 hat, der in einer am Arm 22 fest angebrachten Mutter 25 parallel zum Arm 22 verstellbar ist und durch eine Kontermutter 26 feststellbar ist.

Die Stellvorrichtung 16 kann aber auch als zum Beispiel hydraulisch oder elektrisch verstellbare Positionierungs- und Arretierungsvorrichtung, also als fernverstellbare Stellvorrichtung ausgebildet sein.

Vorliegend ist die Stellvorrichtung 16 eine Einrichtung zum Verstellen des Moments, welches durch die Seiten- oder Axialbelastungseinrichtung 10 bei deren unveränderter Krafteinstellung auf die verschwenkbar gelagerte Halterungseinrichtung 8, 7 ausgeübt wird, denn die Begrenzung des maximalen Sturzwinkels erfolgt durch eine Voreinstellung der Seitenkrafteinleitung zum Beispiel mechanisch, elektrisch oder hydraulisch.

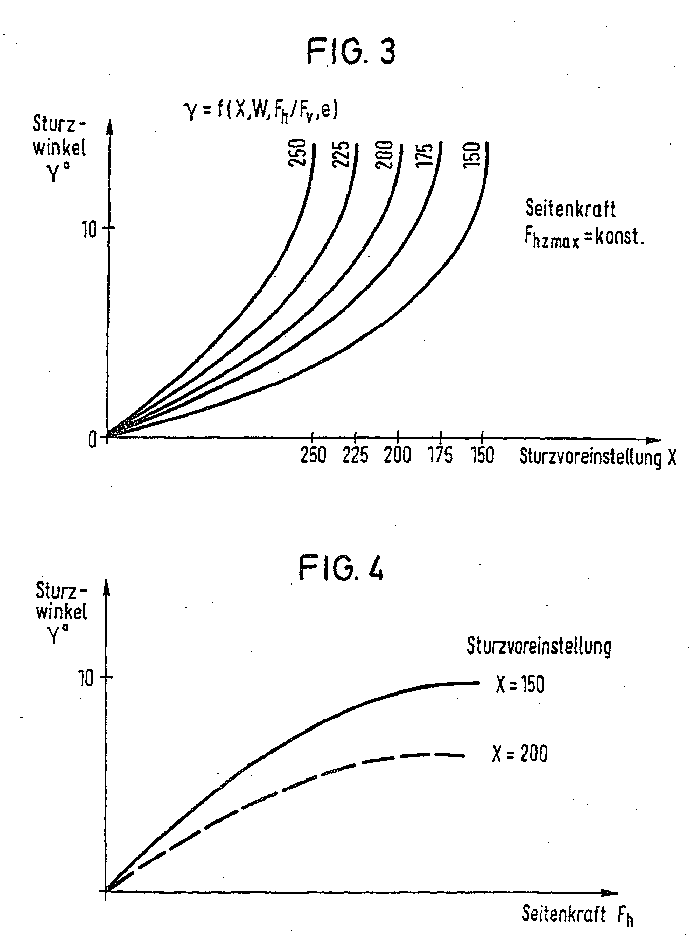

Durch Erhöhung des Abstandes X wird ein geringeres Moment durch F_{hz} erzeugt und der Sturzwinkel γ reduziert. Bei allen Zwischengrößen von F_{hz} bzw. F_{vz} folgt analog ein reduzierter Sturzwinkel γ entsprechend einer Kennlinie, wie die Figuren 3 und 4 zeigen, worin X der in Figur 1 gezeigte Abstand (Sturzvoreinstellung) W die Reifenbreite und e die Einpresstiefe des Rades sind.

Nach erfolgter Voreinstellung stellen sich alle Zwischengrößen des Sturzwinkels entsprechend der Höhe der Kraft F_{vz}, F_{hz} und der Kinematik automatisch ein. Dabei kann infolgedessen auf einen hydraulischen Zylinder zur Sturzeinstellung und die zugehörige komplizierte Steuerung desselben verzichtet werden.

Die optimale Kennlinie, die zu entsprechend zutreffenden Spannungen an den Komponenten Rad und Nabe führt, wird durch Messung mit Dehnungsmessstreifen ermittelt. Daraus folgt, dass diskrete Stellungen bzw. Positionierungen für die Sturzvoreinstellungen ausreichen. Die Werte liegen üblicherweise zwischen 150 mm und 250 mm bei Untersuchungen für Pkw-Räder und bei 170 mm und 350 mm bei Nutzfahrzeug-Rädern.

Bei Vorrichtungen mit der Erzeugung von zusätzlichen Steuergrößen des Sturzwinkels über hydraulische Zylinder müssen diese ständig in jeder Laststufe programmiert werden und folgen nicht der einfachen Kennlinie. Dabei sind aufwändige Fahrbetriebsmessungen im voraus erforderlich, um die zutreffenden Sturzsteuersignale ableiten zu können. Zudem verteuert ein hydraulischer Sturzeinstellzylinder die Versuchseinrichtung und die Versuchskosten erheblich.

Weiterhin ist zum Dämpfen der Bewegung der Halterungseinrichtung 8, 7 eine Dämpfungseinrichtung 27 zwischen dem Arm 22 der Halterungseinrichtung 8, 7 und der Seiten- oder Axialbelastungseinrichtuhg 10 angeordnet.

Die Seiten oder Axialbelastungseinrichtung 10 und die Dämpfungseinrichtung 27 sind über Gelenke 34, 35, 36 und 37 mit dem Arm 22 verbunden

Zur Ansteuerung des vorliegenden Radversuchsstandes unter Einbeziehung von Brems- und Antriebskräften dient ein 4-kanaliges Steuerprogramm, das maßgebende Lastfälle einschließlich Kurven- und Geradeausfahrt simuliert. Das Programm liegt als Basisprogramm für feste Parameter vor. Beispiele sind in den Figuren 5 und 6 gezeigt.

Für neue Komponenten muss dieses Programm für die jeweiligen Lastfälle Geradeausfahrt, Kurvenfahrt, Bremsen und Antrieb an die spezifischen Fahrzeugdaten angepasst werden. Dies erfolgt nach dem in der nachstehenden Tabelle dargestellten Belastungsschema. In diesem Belastungsschema ist entsprechend den kartesischen Koordinaten die Radial- oder Vertikalkraft Fᵥ mit F_{z}, die Seiten- oder Axialkraft Fₕ mit F_{y} und die Bremskraft mit F_{xB} bezeichnet. Die Steuerkanäle werden in den jeweiligen Belastungsabschnitten mit den Lastvielfachen in ihrer Intensität verändert. Die Lastvielfachen werden anhand der Fahrzeugdaten abgeleitet oder messtechnisch ermittelt. Der Lastablauf selbst bleibt dabei gleich.

Mit der obigen Einrichtung kann aufgrund der erfindungsgemäßen Anwendung derselben zum Beispiel in der vorstehenden Art und Weise bereits in der frühen Entwicklungsphase von Fahrzeugrädern und Fahrzeugradkomponenten der Betriebsfestigkeitsnachweis erbracht werden, ohne dass ein Fahrzeug vorliegt, mit dem Messungen durchgeführt werden müssen. Das Basis-Belastungsprogramm beinhaltet die wesentlichen Fahrabschnitte, die lediglich mit Hilfe der für das neue Fahrzeug rechnerisch abgeleiteten Belastungsdaten angepasst werden. Bisherige Versuche erforderten erst ein Messfahrzeug, das entsprechend ausgerüstet werden musste, und die Durchführung aufwendiger Messungen. Damit standen die Belastungsdaten erst am Ende einer Entwicklungsphase zur Verfügung.

**Tabelle:**

| BELASTUNGSDATEN FÜR PROGRAMMANPASSUNG | | | | |
|---|---|---|---|---|
| Belastungsabschnitt | I Geradeausfahrt | II Kurven fahrt | III Bremsen | IV Antrieb |
| Kräfte | S | K | B | A |
| Senkrechte Kraft F_{z} | n_{zs}.F_{zstat} | n_{zk}.F_{zstat} | n_{zB}.F_{zstat} | n_{zA}.F_{zstat} |
| Seitenkraft F_{y} | n_{ys}.F_{zstat} | n_{yk}.F_{zstat} | n_{yB}.F_{zstat} | n_{yA}.F_{zstat} |
| Bremskraft F_{xB} | - | - | n_{FxB}.±F_{B} | - |
| Antriebsmoment/ Schaltmoment M_{xB} | - | - | - | n_{M}=Mₓ |

### Lastvielfache (Anpaßdaten für Fahrzeug)

n_{z} - für Vertikalkraft
n_{y} - für Seitenkraft
n_{FxB} - für Bremskraft
n_{M} - für Antriebs-/Schleppmoment bzw. Schaltmoment

### Fahrzeugdaten

F_{zstat} - statische Radlast
± F_{B} - Bremskraft (vorwärts/rückwärts)
± Mₓ - Antriebs-/Schaltmoment

## Patentansprüche

1. Anwendung einer Einrichtung zur Prüfung von Fahrzeugrädern (3), Reifen (1), Radnaben (4), Radlagern (5) und Radschrauben unter betriebsähnlichen Belastungsbedingungen, umfassend
(a) eine Halterungseinrichtung (6) zum drehbaren Befestigen eines Fahrzeugrads (3) und zum Verschwenken desselben in unterschiedliche Sturzwinkel;
(b) eine derart um das Fahrzeugrad (3) herum angeordnete Trommel (11), dass das Fahrzeugrad (2, 3) über einen darauf befindlichen Reifen (1) in Rolleingriff mit der inneren Umfangsoberfläche der Trommel (11) bringbar ist;
(c) eine Vertikal- oder Radialbelastungseinrichtung (9), die zum Aufbringen einer in der Vertikal- oder Radialrichtung des Fahrzeugrads (2, 3) wirkenden Vertikal- oder Radialkraft auf die Halterungseinrichtung (6) mit letzterer verbunden ist;
(d) eine Seiten- oder Axialbelastungseinrichtung (10) zum Aufbringen einer in der Seiten- oder Axialrichtung des Fahrzeugrads (3) wirkenden Seiten- oder Axialkraft, wobei die Seiten- oder Axialbelastungseinrichtung (10) zum Aufbringen der Seiten- oder Axialkraft auf die Halterungseinrichtung (6) mit letzterer verbunden ist;
(e) wenigstens einen auf der inneren Umfangsoberfläche der Trommel (11) angeordneten Ring, der als Anlaufring (15) benachbart dem Reifen (1) und der Flanke des Fahrzeugrads (3) angeordnet und auf der dem Reifen (1) zugewandten Seite abgeschrägt ist; und
(f) eine Einrichtung (12 bis 14) zum Drehen der Trommel (11),
(g) wobei die Vertikal- oder Radialbelastungseinrichtung (9) und die Seiten- oder Axialbelastungseinrichtung (10) je für sich gelenkig mit der Halterungseinrichtung (6) verbunden sind;
(h) wobei die Vertikal- oder Radialbelastungseinrichtung (9) parallel zur inneren Umgangsoberfläche der Trommel (11) frei verschiebbar gelagert ist;
(i) wobei die Halterungseinrichtung (6) um eine Verschwenkachse (17) verschwenkbar ist, welche parallel zur inneren Umfangsoberfläche der Trommel (11) und senkrecht zur Achse eines Achszapfens (7), der zusammen mit einem Belastungsbügel (8) die Halterungseinrichtung (6) bildet, für die drehbare Befestigung eines Fahrzeugrads verläuft; und
(j) wobei eine Stellvorrichtung (16) zur Voreinstellung (X) des maximalen Sturzes (γ) eines Fahrzeugrads vorgesehen ist;
wobei in Anwendung der Einrichtung folgende Verfahrensschritte bei einem in der Einrichtung befestigten Fahrzeugrad (3) durchgeführt werden:
(1) Einstellen eines Einstellwerts (X) für einen maximalen Sturzwinkel zur Generierung eines, abhängig von der Reifenbreite (W), der Einpresstiefe des Rades (e) und der Kräfteverhältnisse (Fᵥ/Fₕ) den Vertikal- oder Radialkraft (Fᵥ) und der Seiten- oder Axialkraft (Fₕ), eines sich selbsttätig einstellenden Sturzwinkels (γ);
(2) Einstellen von unterschiedlichen Werten der Vertikal- oder Radialkraft (Fᵥ) und der Seiten- oder Axialkraft (Fₕ) und Abrollenlassen des Fahrzeugrads (3) in der Trommel (11), so dass sich unterschiedliche Sturzwinkel (γ) entsprechend der Höhe der Vertikal- oder Radialkraft (Fᵥ) und der Seiten- oder Axialraft (Fₕ) automatisch einstellen;
(3) Erstellen einer optimalen Kennlinie, unter Messung mit Dehnungsmessstreifen, die zu entsprechend zutreffenden Spannungen an Rad und Nabe führt.

2. Anwendung nach Anspruch 1, **dadurch gekennzeichnet, dass** ausgehend von der ermittelten optimalen Kennlinie an Fahrzeugrädern praxisgerechte Lastfälle einschließlich Kurven- und Geradeausfahrt simuliert werden.

3. Anwendung einer Einrichtung gemäß Anspruch 1 oder 2, wobei anstelle des Merkmals (h) das Merkmal vorgesehen ist, dass die Halterungseinrichtung (6) längs einer linearen Verschiebeführung, die um die Verschwenkachse (17) verdrehbar ist, frei verschieblich ist, und dass die Vertikal- oder Radialbelastungseinrichtung (9) parallel zur inneren Umfangsoberfläche der Trommel verstellbar ist.

## Claims

1. Use of an assembly for testing vehicle wheels (3), tyres (1), wheel hubs (4), wheel bearings (5) and wheel bolts under operational load conditions, comprising
(a) a holding assembly (6) for rotatable fastening of a vehicle wheel (3) and for pivoting the same into various angles of inclination;
(b) a drum (11) arranged round the vehicle wheel (3) in such a way that the vehicle wheel (2, 3) can be brought via a tyre (1) located thereon into rolling engagement with the internal peripheral surface of the drum (11);
(c) a vertical or radial loading assembly (9) which is connected to the holding assembly (6) in order to apply thereto a vertical or radial force which acts in the vertical or radial direction of the vehicle wheel (2, 3);
(d) a lateral or axial loading assembly (10) to apply a lateral or axial force which acts in the lateral or axial direction of the vehicle wheel (3), the lateral or axial loading assembly (10) being connected to the holding assembly (6) in order to apply the lateral or axial force thereto;
(e) at least one ring which is arranged on the internal peripheral surface of the drum (11) and is arranged as a thrust ring (15) adjacent to the tyre (1) and the side of the vehicle wheel (3) and is bevelled on the side facing the tyre (1); and
(f) an assembly (12 to 14) for rotating the drum (11),
(g) the vertical or radial loading assembly (9) and the lateral or axial loading assembly (10) each being independently articulated to the holding assembly (6);
(h) the vertical or radial loading assembly (9) being freely displaceably mounted parallel to the internal peripheral surface of the drum (11);
(i) the holding assembly (6) being pivotal about a pivot axis (17) which extends parallel to the internal peripheral surface of the drum (11) and perpendicularly to the axis of a journal (7) which together with a loading bracket (8) forms the holding assembly (6) for rotatable fastening of a vehicle wheel; and
(j) an adjusting device (16) being provided for pre-adjustment (X) of the maximum camber (γ) of a vehicle wheel;
wherein during use of the assembly the following process steps are carried out upon a vehicle wheel (3) fastened in the assembly:
(1) setting of a setting value (X) for a maximum angle of inclination to generate an automatically set angle of inclination (γ) as a function of the tyre width (W), the insertion depth of the wheel (e) and the force ratios (Fᵥ/Fₕ) of the vertical or radial force (Fᵥ) and the lateral or axial force (Fₕ);
(2) setting various values of the vertical or radial force (Fᵥ) and the lateral or axial force (Fₕ) and allowing the vehicle wheel (3) to roll in the drum (11) so various angles of inclination (γ) are automatically set in accordance with the size of the vertical or radial force (Fᵥ) and the lateral or axial force (Fₕ) ;
(3) preparing an optimum characteristic curve by measurement using wire strain gauges, which curve leads to appropriate stresses on wheel and hub.

2. Use according to claim 1, **characterised in that**, proceeding from the optimum characteristic curve ascertained, realistic types of load, including travelling round bends and travelling in a straight line, are simulated on the vehicle wheels.

3. Use of an assembly according to claim 1 or 2, wherein instead of the feature (h) it is provided that the holding assembly (6) can be freely displaced along a linear displacement guideway which can be rotated about the pivot axis (17) and that the vertical or radial loading assembly (9) can be displaced parallel to the internal peripheral surface of the drum.

## Revendications

1. Utilisation d'un dispositif pour tester des roues (3) d'un véhicule, des pneumatiques (1), des moyeux de roues (4), des roulements de roues (5) et des vis de roues dans des conditions de charge semblables à celles du fonctionnement réel, comprenant:
(a) un dispositif de retenue (6) pour fixer avec possibilité de rotation une roue (3) du véhicule et pour faire basculer cette dernière sur des angles de carrossage différents;
(b) un tambour (11) disposé autour de la roue (3) du véhicule de telle sorte que la roue (2, 3) du véhicule peut être amenée au moyen d'un pneumatique (1) situé sur cette zone en contact, en roulant, avec la surface périphérique intérieure du tambour (11);
(c) un dispositif de charge verticale ou radiale (9), qui pour appliquer une force verticale ou radiale agissant dans la direction verticale ou radiale de la roue (2, 3) du véhicule au dispositif de retenue (6) est relié à ce dernier;
(d) un dispositif de charge latérale ou axiale (10) pour appliquer une force latérale ou axiale agissant dans la direction latérale ou axiale de la roue (3) du véhicule, le dispositif de charge latérale ou axiale (10) pour appliquer une force latérale ou axiale au dispositif de retenue (6) étant relié à ce dernier;
(e) au moins un anneau disposé sur la surface périphérique intérieure du tambour (11) et qui, en tant qu'anneau de lancement (15) est disposé au voisinage du pneumatique (1) et du flanc de la roue (3) du véhicule et est biseauté sur le côté tourné vers le pneumatique (1); et
(f) un dispositif (12 à 14) servant à faire tourner le tambour (11);
(g) le dispositif de charge verticale ou radiale (9) et le dispositif de charge latérale ou axiale (10) étant reliés chacun en soi d'une manière articulée au dispositif de retenue (6);
(h) le dispositif de charge verticale ou radiale (9) étant monté de manière à être déplaçable librement parallèlement à la surface périphérique intérieure du tambour (11);
(i) le dispositif de retenue (6) pouvant basculer autour d'un axe de basculement (17) qui est parallèle à la surface périphérique intérieure du tambour (11) et est perpendiculaire à l'axe d'un tourillon axial (7), qui forme, conjointement avec un étrier de charge (8), le dispositif de retenue (6), pour la fixation, avec possibilité de rotation, d'une roue du véhicule; et
(j) un dispositif de réglable (16) étant prévu pour le préréglage (X) de l'angle de carrossage maximum (γ) d'une roue du véhicule;
les étapes opératoires suivantes étant mises en oeuvre lors de l'utilisation du dispositif pour une roue de véhicule
(3) fixée dans le dispositif:
(1) réglage d'une valeur de réglage (X) pour un angle de carrossage maximum pour l'obtention d'un angle de carrossage qui se règle automatiquement, en fonction de la largeur (W) du pneumatique, de la profondeur de pressage de la roue (e) et des rapports de forces (Fᵥ, Fₕ) entre la force verticale ou radiale (Fᵥ) et la force latérale ou axiale (Fₕ);
(2) réglage de différentes valeurs de la force verticale ou radiale (Fᵥ) et de la force latérale ou axiale (Fₕ) et mise en roulement de la roue (3) du véhicule dans le tambour (11) de telle sorte que différents angles de carrossage (γ) se règlent automatiquement en fonction de l'intensité de la force verticale ou radiale (Fᵥ) et de la force latérale ou radiale (Fₕ);
(3) établissement, moyennant la mesure avec des jauges extensométriques, d'une courbe caractéristique optimale, qui conduit à des contraintes associées de façon correspondante au niveau de la roue et du moyeu.

2. Utilisation selon la revendication 1, **caractérisée en ce que** des cas de charge conformes à la pratique, y compris dans le cas du franchissement de courbes et d'un déplacement rectiligne, au niveau des roues du véhicule, sont simulés à partir de la courbe caractéristique optimale déterminée.

3. Utilisation d'un dispositif selon la revendication 1 ou 2, dans laquelle la place de la caractéristique (h), il est prévu une caractéristique selon laquelle le dispositif de retenue (6) est déplaçable librement le long d'un guide linéaire de déplacement, qui peut tourner autour de l'axe de pivotement (17), et le dispositif de contrainte verticale ou radiale (9) est réglable parallèlement à la surface périphérique intérieure du tambour.
